# EUROPEAN PATENT APPLICATION

(11) **EP 2 067 954 A1**
(43) Date of publication of application: **10.06.2009**
(21) Application number: 07122091.7
(22) Date of filing: 03.12.2007
(51) Int. Cl.: F02B 19/10, F02N 17/00, F02B 19/12

(54) **Pre-combustion chamber engine having combustion-initiated starting**

(71) Applicant: Caterpillar Motoren GmbH & Co. KG, 24159 Kiel (DE)
(72) Inventor: Schlemmer-Kelling, Udo, 24113 Molfsee (DE)
(74) Representative: Hatzmann, Martin

(57) **Abstract**

The disclosure provides pre-combustion chamber combustion engine having combustion-initiated starting and a method for starting such an engine. The engine may include a plurality of combustion chambers each having a pre-combustion chamber and a main chamber. The engine may have a plurality of piston assemblies each movable in an associated main chamber. At least one pre-combustion chamber fuel valve may be associated with each pre-combustion chamber and may be controllable to introduce an amount of fuel into the associated pre-combustion chamber. An ignition arrangement may be associated with each pre-combustion chamber. A controller may be determine a position of and select at least one piston assembly that is in a desired range of piston positions. The controller may regulate operation of the at least one pre-combustion chamber fuel valve to introduce fuel into the selected pre-combustion chamber and activate the selected ignition arrangement to initiate cranking of the engine.

## Description

### Technical Field

This disclosure relates to a pre-combustion chamber engine having combustion initiated starting.

### Background

Internal combustion engines include at least one combustion chamber in which a piston assembly is reciprocally movable. The reciprocal movement of the piston assembly is converted into a rotational movement of an associated crankshaft. Generally, the rotational movement of the crankshaft is used for driving a load. In some internal combustion engines, the at least one combustion chamber is provided with a main chamber and a pre-combustion chamber. Fuel and air is introduced into both the main chamber and the pre-combustion chamber. The fuel mixes with the air in the pre-combustion chamber and is ignited by an ignition arrangement. The fuel also mixes with the air in the main chamber of the combustion chamber and is subsequently ignited by the flame or flames which via orifices project out of the pre-combustion chamber into the main chamber of the combustion chamber. Such an arrangement is especially used for very large engines, in which the piston diameter may be, for example, more than 200 mm. Internal combustion engines having combustion chambers with a main chamber and a pre-combustion chamber are normally started with a start motor which drives the crankshaft while simultaneously introducing fuel, such as gas, into the pre-combustion chambers and main chambers of the combustion chambers and activating the ignition arrangements. The forced rotational movement of the crankshaft caused by the start motor, called cranking, leads to a reciprocal movement of the piston assemblies and to air and gas intake into the main chambers and the pre-combustion chambers of the combustion chambers. For filling the pre-combustion chamber, the internal combustion engines may be connected to a fuel supply line via a check valve. The low pressure in the combustion chamber during an intake stroke of the piston assembly may open the check valve and thus the pre-combustion chamber may be filled with an air/fuel mixture. During the cranking caused by the action of the start motor, the ignition arrangement of the at least one combustion chamber may be activated and may cause combustion of the air/fuel mixture in the pre-combustion chamber and subsequently the main chamber. After that, the engine will keep rotating by itself without help of the start motor.

It is clear that such a procedure requires a separate motor for driving the crankshaft during the starting procedure, which adds to the costs of the total system. However, the external energy provided by the start motor is necessary to initiate movement of the piston assemblies and to open the check valves that fill the pre-combustion chambers and to open valves of the main chambers of the combustion chambers to fill these with fuel/air mixture and to exhaust these. When the engines are very large and have a plurality of combustion chambers, the torque required for driving the crankshaft is very high and, consequently, the start motor must be powerful, which generally equates to a heavy and expensive motor.

For engines operating on the Otto cycle with direct gasoline injection the German journal MTZ of 09/2006 describes on pages 636-644 one possible solution to the problem described above. In that article, it is described that the gasoline is directly injected into the combustion chamber of which a piston assembly is in a power stroke position. For that purpose, use is made of the fuel injection valve which is available anyway for the normal operation of that type of engine. Subsequently or simultaneously, the injected fuel is ignited by an ignition arrangement provided in the combustion chamber. Consequently, the piston assembly of that combustion chamber makes a power stroke. This course of action can be repeated for subsequent combustion chambers of which the piston assembly reaches the power stroke position. Thus the engine is cranking and normal operation of the engine may commence.

Although the article seems to provide a feasible solution for starting an engine operating according to the Otto cycle having fuel injection with controllable fuel valves, the article does not provide a solution for starting an internal combustion engine having at least one combustion chamber with a main chamber and a pre-combustion chamber which does not have fuel injection. No suggestions are provided how fuel could be introduced into the pre-combustion chamber and the main chamber of the combustion chambers of such an engine. Nor does it provide any hint for obtaining the right air/fuel mixture in the pre-combustion chamber. More particular, the article does not provide a solution to start very large internal combustion engines having a plurality of combustion chambers.

The present disclosure is aimed at overcoming or alleviating at least some of the problems associated with the prior art.

### Summary of the Invention

In one aspect of the disclosure an engine is provided that may include a plurality of of combustion chambers. Each combustion chamber may have a pre-combustion chamber and a main chamber. The engine may have a plurality of piston assemblies. Each of the plurality of piston assemblies may be movable in the main chamber of an associated one of the plurality of combustion chambers. At least one pre-combustion chamber fuel valve may be associated with each pre-combustion chamber and may be controllable to introduce an amount of fuel into the associated pre-combustion chamber. An ignition arrangement may be associated with each pre-combustion chamber. A controller may be configured to determine a position of at least one of the piston assemblies and to select at least one piston assembly that is in a desired range of piston positions. The controller may further be configured to regulate operation of the at least one pre-combustion chamber fuel valve to introduce fuel into the pre-combustion chamber associated with the selected at least one piston assembly and to activate the ignition arrangement associated with the selected at least one piston assembly to initiate cranking of the engine.

In another aspect of the disclosure, a method may be provided for starting such an engine. The method may include determining a position of at least one of the piston assemblies and selecting at least one piston assembly that is in a desired range of piston positions. The method may also include introducing a controllable amount of fuel into the pre-combustion chamber associated with the selected at least one piston assembly and igniting the fuel in the pre-combustion chamber associated with the selected at least one piston assembly to initiate cranking of the engine.

### Brief Description of the Drawings

Fig. 1 is a schematic cross-section of a first embodiment of a pre-combustion chamber combustion engine;

Fig. 2 is a schematic cross-section of a second embodiment of a pre-combustion chamber combustion engine; and

Fig. 3 is a flow diagram of an embodiment of the method for starting an engine.

### Detailed Description

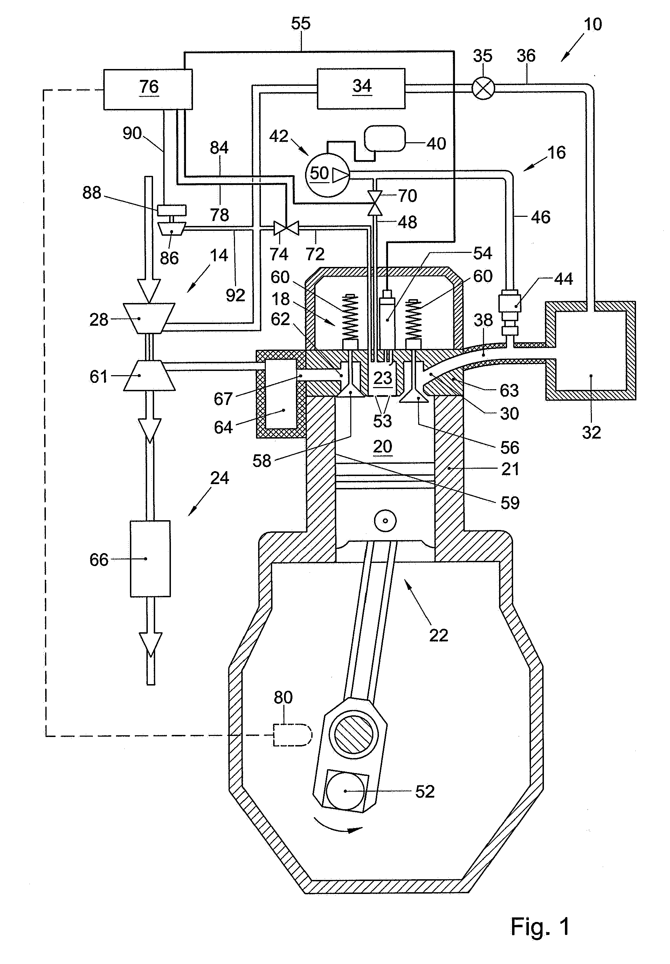

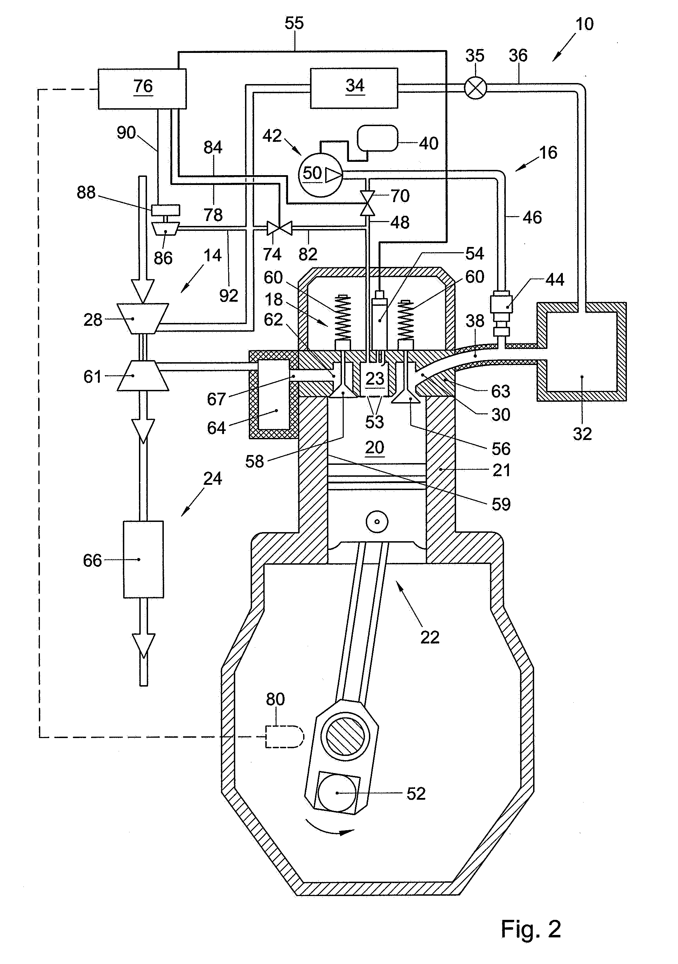

Internal combustion engine 10 may be configured to compress a mixture of fuel and air, which is then controllably spark-ignited to produce a power output and exhaust. As illustrated in FIGS. 1 and 2, engine 10 may include an air induction system 14, a fuel system 16, a valve actuation system 18, a plurality of combustion chambers 20 (only one shown), a piston assembly 22 disposed within each combustion chamber 20, a pre-chamber 23 associated with each combustion chamber 20 and an exhaust system 24.

Air induction system 14 may include a means for introducing charged air into combustion chambers 20 of engine 10. For example, air induction system 14 may include a compressor 28 in fluid communication with one or more intake ports 30 via an intake manifold 32. Air induction system 14 may also include an air cooler 34 configured to cool compressed air from compressor 28 before the air enters intake manifold 32, and a throttle valve 35 configured to regulate the flow of air into engine 10. It is contemplated that compressor 28 may be absent, if a naturally-aspirated engine is desired. It is further contemplated that additional and/or different components may be included within air induction system 14 such as, for example, an air cleaner, a wastegate, a bypass system, a control system, and other means known in the art for introducing charged air into combustion chambers 20. It is also contemplated that the throttle valve 35 may be omitted and that, instead, the rotational speed of the compressor 28 may be regulated for regulating the flow of air into engine 10. This may for example be done by a wastegate valve regulating the amount of exhaust gas that is directed to the turbocharger. Especially, when the fuel is gas, this may be a feasible option. It is contemplated that compressor 28 may be driven by exhaust gas, when available, and/or by a compressor motor, such as for example an electromotor. Such a compressor motor may be used during a start up phase of the internal combustion engine 10.

Compressor 28 may be fluidly connected to intake manifold 32 via a fluid conduit 36 and configured to compress the air flowing into engine 10 to a predetermined pressure level. Compressor 28 may embody a fixed geometry compressor, a variable geometry compressor, or any other type of compressor known in the art. It is contemplated that multiple compressors 28 may alternatively be included within air induction system 14 and disposed in a series or parallel relationship.

Inlet port 30 may be connected to intake manifold 32 via a fluid passageway 38 and configured to fluidly communicate the compressed air from intake manifold 32 with valve actuation system 18 associated with each combustion chamber 20. It is contemplated that multiple intake ports 30 may be associated with each combustion chamber 20. Intake manifold 32 may be configured to distribute air to each of combustion chambers 20 and may include an inlet and an outlet. It is contemplated that multiple intake manifolds 32 may be included within engine 10, each intake manifold 32 distributing air from a single common inlet to separate banks of combustion chambers 20.

Air cooler 34 may facilitate the transfer of heat to or from the air compressed by compressors 28, prior to the compressed air entering intake manifold 32. For example, air cooler 34 may embody an air-to-air heat exchanger or a liquid-to-air heat exchanger. Air cooler 34 may include a tube and shell type heat exchanger, a plate type heat exchanger, or any other type of heat exchanger known in the art.

Throttle valve 35 may be located within fluid conduit 36 and between compressor 28 and engine 10 to control the amount of air delivered to combustion chambers 20. Throttle valve 35 may be positioned at any suitable location within fluid conduit 36 such as, for example, before or after cooler 34. Throttle valve 35 may include a valve element movable from a flow-passing position against a spring bias toward a flow-restricting position. When in the flow-passing position, inktake air may be directed into engine 10 substantially unrestricted. The term restricted, for the purposes of this disclosure, is to be interpreted as at least partially blocked from fluid flow. It is also contemplated that the valve element of throttle valve 35, when in the flow-restricting position, may be fully blocked from fluid flow. Throttle valve 35 may include a butterfly valve element, a spool valve element, a shutter valve element, a check valve element, a diaphragm valve element, a gate valve element, a shuttle valve element, a ball valve element, a globe valve element, or any other type of valve element known in the art. As stated earlier, it is also contemplated that the throttle valve 35 may be omitted and that, instead, the rotational speed of the compressor 28 may be regulated for regulating the flow of air into engine 10. This may for example be done by a wastegate valve regulating the amount of exhaust gas that is directed to the turbocharger.

Fuel system 16 may include components that cooperate to supply fuel to combustion and pre-combustion chambers 20, 23 of engine 10. Specifically, fuel system 16 may include a fuel source 40 configured to hold a supply of fuel, a fuel pumping arrangement 42 configured to pressurize the fuel and direct the pressurized fuel to a plurality of fuel injectors 44 or fuel valves 44 by way of a manifold 46, and to each pre-combustion chamber 23 by way of a pre-combustion chamber fuel line 48. The fuel may be a liquid fuel or a gaseous fuel.

Fuel pumping arrangement 42 may include one or more pumping devices that function to increase the pressure of the fuel and direct one or more pressurized streams of fuel to manifold 46. In one example, fuel pumping arrangement 42 includes a low pressure source 50. Low pressure source 50 may embody a transfer pump configured to provide low pressure feed to manifold 46. A check valve (not shown) may be disposed between low pressure source 50 and manifold 46 to provide for one-directional flow of fuel from fuel pumping arrangement 42 to manifold 46. It is contemplated that fuel pumping arrangement 42 may include additional and/or different components than those listed above such as, for example, a high pressure source disposed in series with low pressure source 50.

Low pressure source 50 may be operably connected to engine 10 and driven by crankshaft 52. Low pressure source 50 may be connected with crankshaft 52 in any manner readily apparent to one skilled in the art where a rotation of crankshaft 52 will result in a corresponding rotation of a pump drive shaft (not shown). For example, a pump driveshaft of low pressure source 50 may be connected to crankshaft 52 through a gear train (not shown), or may alternatively be driven electrically, hydraulically, pneumatically, or in any other appropriate manner.

Each fuel injector or fuel valve 44 may be operable to inject or introduce a predetermined amount of fuel at predetermined timings and fuel pressures. The timing of fuel injection or fuel introduction may be synchronized with the motion of piston assembly 22. For example, fuel may be injected or introduced as piston assembly 22 nears a top-dead-center position in a compression stroke, as piston assembly 22 begins the compression stroke heading towards a top-dead-center position, or as piston assembly 22 is moving from a top-dead-center position towards a bottom-dead-center position during an expansion stroke. In order to accomplish these specific injection or introduction events, engine 10 may request a specific quantity of fuel be injected or introduced at a specific start of injection (SOI) timing, a specific SOI pressure, and/or a specific end of injection (EOI) pressure.

The amount of fuel injected or introduced into fluid passageway 38 by fuel injector or fuel valve 44 may at least partially control the ratio of fuel to air introduced into main combustion chamber 20. Specifically, if it is desired to introduce a lean mixture of fuel and air (mixture having a relatively low amount of fuel compared to the amount of air) into main combustion chamber 20, fuel injector or fuel valve 44 may inject or introduce fuel for a shorter period of time than if a rich mixture of fuel and air (mixture having a relatively large amount of fuel compared to the amount of air) is desired. Likewise, if a rich mixture of fuel and air is desired, fuel injector or fuel valve 44 may inject or introduce fuel for a longer period of time than if a lean mixture is desired. It is contemplated that fuel injector 44 may be omitted, if desired, and an alternate type of fuel valve included, if desired.

Valve actuation system 18 may be configured to meter a fuel and air mixture into and allow exhaust out of main combustion chamber 20 and may include at least one intake valve 56, at least one exhaust valve 58, and a return spring 60 associated with each of intake and exhaust valves 56, 58. Additional components may be included within valve actuation system 18 such as, for example, a valve actuator (not shown), additional intake and exhaust valves 56, 58 associated with each main combustion chamber 20, a bridge member interconnecting multiple intake valves 56 or exhaust valves 58, and other components known in the art. The valve actuator may embody any means for actuating intake valve 56 or exhaust valve 58 such as, for example, a cam/pushrod/rocker arm assembly, a solenoid actuator, a hydraulic actuator, or any other means for actuating known in the art.

Intake valve 56 may selectively fluidly communicate intake port 30 with main combustion chamber 20. Specifically, intake valve 56 may be movable between a first position at which the fuel and air mixture flows into main combustion chamber 20, and a second position at which intake valve 56 engages a seat to block the fuel and air mixture from main combustion chamber 20.

Exhaust valve 58 may selectively fluidly communicate exhaust system 24 with main combustion chamber 20 to selectively allow exhaust to flow from main combustion chamber 20 into exhaust system 24. In particular, exhaust valve 58 may be movable between a first position at which the exhaust flows out of main combustion chamber 20 and a second position at which exhaust valve 58 engages a seat to block exhaust from exiting main combustion chamber 20.

Each combustion chamber 20 may be configured to receive the fuel and air mixture from fuel and air induction systems 16, 14, to house the combustion process, and to direct exhaust resulting from the combustion process to exhaust system 24. Combustion chamber 20 may be at least partially defined by a cylinder bore 59 formed within engine block 21, a cylinder head 63 connected to engine block 21, and piston assembly 22. It is contemplated that additional elements may cooperate to further define combustion chamber 20 such as, for example, a cooling chamber (not shown) disposed between cylinder bore 59 and engine block 21, a cylinder liner (not shown) disposed within cylinder bore 59, a means (not shown) for sealing cylinder head 63 to engine block 21, and other combustion chamber components known in the art.

Piston assembly 22 may be slidably disposed with each combustion chamber 20 of engine 10 and configured to reciprocate between a bottom-dead-center (BDC) position, or lowermost position within combustion chamber 20, and a top-dead-center (TDC) position, or uppermost position within combustion chamber 20. In particular, piston assembly 22 may include a piston and a connecting rod that connects piston assembly 22 to crankshaft 52 of engine 10. As crankshaft 52 rotates 180 degrees, piston assembly 22 may move through one full stroke between BDC and TDC. Engine 10 may be a four stroke engine, wherein a complete cycle includes an intake stroke (TDC to BDC), a compression stroke (BDC to TDC), a power stroke (TDC to BDC), and an exhaust stroke (BDC to TDC).

Pre-combustion chamber 23 may include one or more orifices 53 in fluid communication with main combustion chamber 20, and a bore configured to receive a spark plug 54. The spark plug 54 or other ignition arrangement for forming a spark may be operably connected to a controller 76 via ignition signal line 55. The controller 76 may determine the moment at which the ignition arrangement may be activated to form a spark. Pre-combustion chamber 23 may be exposed to the same mixture of fuel and air that is present in main combustion chamber 20 via orifices 53. It is contemplated that any number of orifices 53 may be included within pre-combustion chamber 23.

Pre-combustion chamber 23 may facilitate operation of engine 10 during lean bum conditions. Specifically, during a lean burn condition, the fuel/air mixture within combustion chamber 20 may be too lean to reliably spark ignite. To initiate combustion of this lean fuel/air mixture, fuel from low pressure source 50 may be directed into pre-combustion chamber 23 via pre-combustion chamber fuel line 48 to create a locally rich atmosphere readily ignitable via spark plug 54. A spark developed across electrodes of spark plug 54 may ignite the locally rich atmosphere creating a flame, which may be jetted or otherwise advanced out of pre-combustion chamber 23 via orifices 53 into combustion chamber 20. The flame jet may ignite the lean fuel/air mixture within combustion chamber 20 at the desired SOI timing to drive piston assembly 22 downward, thereby generating mechanical output. In this manner, a lean, normally non-combustible fuel/air mixture may be reliably combusted.

It is contemplated that a dedicated pre-combustion chamber fuel valve or injector element 70 may be disposed within pre-combustion chamber fuel line 48 and associated with pre-combustion chamber 23 to regulate the introduction of fuel into pre-combustion chamber 23. The pre-combustion chamber fuel valve or injector element 70 may be controlled by a controller 76 that may be connected to the valve or injector element 70 via control line 84.

In one embodiment, as shown in Fig. 1, pre-combustion chamber 23 may also be provided with a pre-combustion chamber air inlet 72. However, an embodiment without such a pre-combustion chamber air inlet 72 also forms part of this disclosure. The pre-combustion chamber air inlet 72 may be connected with the airline 36 upstream of the after cooler 34. In another embodiment pre-combustion chamber air inlet 72 may be connected downstream of after cooler 34, for example, with intake manifold 32. The pre-combustion chamber air inlet 72 may include a controllable pre-combustion chamber air valve 74, which may be connected to the controller 76 via a control line 78. The controllable pre-combustion chamber air valve 74 may be of any known type and may include a butterfly valve element, a spool valve element, a shutter valve element, a check valve element, a diaphragm valve element, a gate valve element, a shuttle valve element, a ball valve element, a globe valve element, or any other type of valve element known in the art that is able to be controlled. Both opening time as throughput of pre-combustion chamber air valve 74 may be controllable. In order to be able to provide air to the pre-combustion chamber before the compressor 28 of the turbocharger is driven by the turbine 61 thereof, a separate compressor 86 may be provided. The compressor 86 may be driven by a compressor motor 88, which may be controlled via control line 90 by controller 76. The compressor motor 88 may, for example, be an electromotor. A fluid conduit 92 connected to an outlet of the compressor 86 may be in fluid connection with the pre-combustion chamber air inlet 72. The connection may be upstream of pre-combustion chamber air valve 74. In another embodiment, the fluid conduit 92 may be connected downstream of the pre-combustion chamber air valve 74 and the amount of air supplied to a selected pre-combustion chamber may be controlled by controlling compressor motor 88 via controller 76.

The controller 76 may be connected to a sensor 80, via which a signal can be obtained that is indicative of the rotational position of the crankshaft 2. From this signal, the position of the piston assemblies 22 of the various combustion chambers 20 may be derived by the controller 76. Instead of a sensor 80 that senses a characteristic that is indicative of the position of the crankshaft 52, a sensor may be provided that senses a characteristic that is indicative of the rotational position of a related part such as, for example, a camshaft (not shown). The rotational position of the camshaft may be indicative of the positions of the piston assemblies 22 of the various combustion chambers 20. In an alternative embodiment, a sensor may be provided that senses a characteristic that is directly indicative of the position of a piston assembly 22, for example, by sensing the linear position of a piston assembly 22. The sensor may be of any type, such as a visual sensor, a magnetic sensor, an angle encoder and the like.

In another embodiment, of which an example is shown in Fig. 2, a pre-combustion chamber air inlet 82 may be connected to a pre-combustion chamber fuel supply line 48 instead of directly to the pre-combustion chamber 23. Also in that embodiment, pre-combustion chamber air inlet 82 may be in fluid connection with a compressor 88 that may be driven by a compressor motor 88 that may be controlled by controller 76 via control line 90. A fluid conduit 92 connecting the compressor 86 with the pre-combustion chamber inlet 82 may, as explained with reference to the embodiment of Fig. 1, be upstream of, or downstream of the pre-combustion chamber air valve 74.

Pre-combustion chamber 23 may facilitate operation of engine 10 during lean bum conditions without enriching the fuel/air mixture. Specifically, although the fuel/air mixture within main combustion chamber 20 may be too lean to ignite desirably, the fuel/air mixture may still ignite. As this lean fuel/air mixture within pre-combustion chamber 23 does ignite, flame jets may be created that advanced out of pre-combustion chamber 23 via orifices 53 into combustion chamber 20 to ignite the lean fuel/air mixture within combustion chamber 20 in a desirable manner. In this manner, pre-combustion chamber 23 may enable a lean bum condition, even without fuel enriching.

Exhaust system 24 may be configured to direct exhaust from combustion chamber 20 to a turbine 61 via an exhaust port 62 and an exhaust manifold 64. After exiting turbine 61, the exhaust may be directed through a catalyzed member 66 to the atmosphere. It is contemplated that exhaust system 24 may include additional and/or different components than those recited above such as, for example, a particulate filter, or any other exhaust system component known in the art.

Turbine 61 may be connected to drive compressor 28. In particular, as the hot exhaust gases exiting engine 10 expand against blades (not shown) of turbine 61, turbine 61 may rotate and drive compressor 28. It is contemplated that more than one turbine 61 may alternatively be included within exhaust system 24 and disposed in a parallel or series relationship, if desired. It is also contemplated that turbine 61 may be omitted and compressor 28 driven by engine 10 mechanically, hydraulically, electrically, or in any other manner known in the art, if desired.

Exhaust port 62 may be connected to intake manifold 64 via a fluid passageway 67 and configured to fluidly communicate exhaust from combustion chambers 20 with exhaust manifold 64. It is contemplated that multiple exhaust ports 62 may be associated with each combustion chamber 20.

Exhaust manifold 64 may be configured to collect exhaust from each of combustion chambers 20 and to direct the exhaust to turbine 61. Exhaust manifold 64 may include an inlet and an outlet. It is contemplated that multiple exhaust manifolds 64 may be included within engine 10, each exhaust manifold 64 collecting exhaust from separate banks of combustion chambers 20 and directing the exhaust from engine 10 via a single common outlet.

Catalyzed member 66 may include a structure coated with or otherwise containing a catalyst to reduce the by-products of combustion. In one example, the structure may be coated with a 3-way catalyst that supports the reduction of hydrocarbons (HC), carbon dioxide (CO), and particulate matter. The catalyst may include, for example, a base metal oxide, a molten salt, or a precious metal that catalytically reacts with HC, CO, and particulate matter. It is contemplated that the catalyzed member 66 may be omitted, if desired.

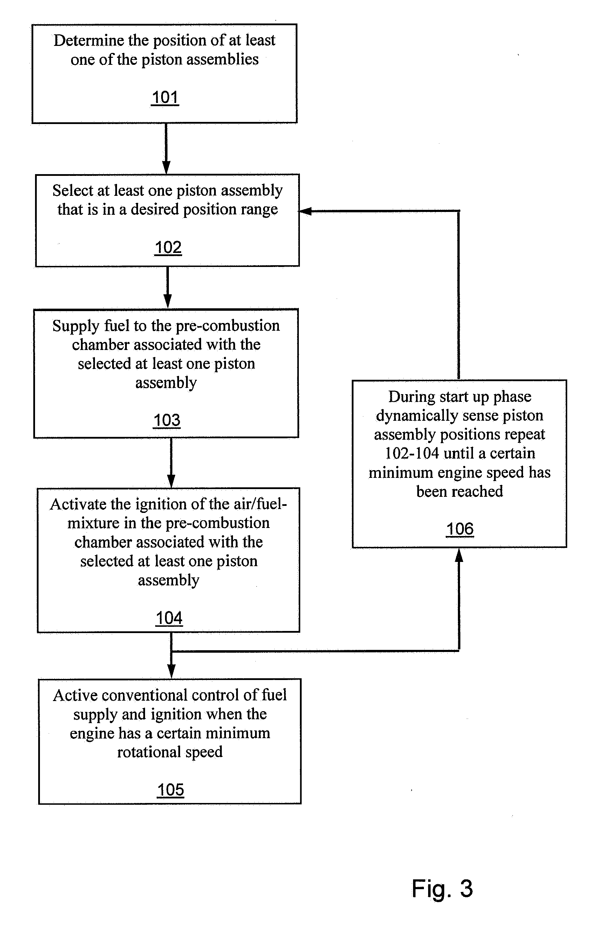

The operation of the pre-combustion chamber engine embodiments described above will be discussed with reference to Fig. 3.

### Industrial Applicability

Pre-combustion chamber engines 10 may have application wherever power is required to perform one or more tasks. Pre-combustion chamber engines 10 may produce power by combusting fuel with air in combustion chambers 20 to drive crankshaft 52, and any power loads connected to crankshaft 52.

The present disclosure may provide the possibility to start pre-combustion chamber engines without the need to initiate cranking of the crankshaft 52 with a separate start motor arrangement. The disclosure may make it possible to start very large gas engines with pre-combustion chambers without a separate starting motor. This may lead to a considerable cost reduction relative to the conventional pre-combustion chamber engines which are, up to now always equipped with a separate start motor arrangement.

Turning now to Fig. 3, the manner in which the controller 31 operates to start the pre-combustion chamber engine 10 will be explained. When a pre-combustion chamber engine is to be started, the controller 76 may receive a start signal. Such a start signal may be induced by turning a start key or operating a start button. Upon receiving a start signal, the controller 76 may determine a position of at least one of the piston assemblies 22. To that end, the controller 76 may read out sensor 80 to obtain information indicative of the position of at least one of the piston assemblies 22. Such information may in one embodiment include information about the rotational position of the crankshaft 2 or of another part with which the sensor cooperates and of which the position is indicative of the position of the various piston assemblies 22. Such information may, for example, be obtained by the sensor 80, such as for example an angle encoder. In another embodiment the information may include information of the actual piston assembly position within the combustion chamber 20 obtained by means of a linear sensor. The controller 76 may derive from the sensor signal the position of at least one of the plurality of piston assemblies 22 of the engine 10 and may select which piston assemblies 22 are within a desired position range. A desired position range may, for example, include a range of positions within the power stroke angles of a piston assembly 22. The desired position range may be a range of positions which, when a fuel/air-mixture is introduced into the combustion chamber and is ignited, may lead to a movement of the piston assembly 22 and the crankshaft 52 in a desired direction. In other words, piston assemblies 22 may be in a desired position range when cranking of the crankshaft 52 is obtained if an air/fuel-mixture in the associated combustion chamber 20 of that piston assembly 22 is fired. The determination of the position of at least one of the piston assemblies is represented by block 101 1 in Fig. 3. The selection of at least one piston assembly that may be in a desired position range is represented by block 102 in Fig. 3.

In an alternative embodiment, the information indicative of the position of at least one of the piston assemblies 22 may have been obtained when the engine 10 stopped rotating after shut down the last time before the engine 10 is started again. Such information may be stored in a memory of the controller 76. The memory may, for example, store which of the piston assemblies 22 are within a desired position range. In that embodiment the actions represented in block 101 1 and 102 in Fig. 3 may be performed after rotation of the engine 10 has stopped at shut down of the engine 10.

Block 103 of Fig. 3 represents the supply of fuel to the pre-combustion chambers 23 of the combustion chamber 20 of which the piston assemblies 22 are selected because these are within the desired position range. The supply of fuel may be effected by opening pre-combustion chamber fuel valve 70 in pre-combustion chamber fuel supply line 48. This opening may be effected by a signal from the controller 76 via a control line 84. Simultaneously, air may be supplied to the pre-combustion chamber 23. This may be effected by opening pre-combustion chamber air valve 74 in air supply line 78. Air may be supplied by compressor 86 that may be driven by compressor motor 88. After the start signal, controller 76 may control compressor motor 88 via control line 90 to start this motor, so that air pressure may be build up for filling the selected pre-combustion chambers 23. In an alternative embodiment pressurized air for supplying the selected pre-chambers 23 may also be stored in a pressurized air source such as an pressurized air tank. The air source may be filled with pressurized air obtained from the turbocharger compressor 61 when the engine is operative. The opening of pre-combustion chamber air valve 74 may be effected through a signal from the controller 76 via control line 78. The controller 76 may regulate pre-combustion chamber air inlet 74 and pre-combustion chamber fuel valve 70 such that a fuel/air mixture of a desired ratio is obtained in the pre-combustion chamber 23. The ratio in the pre-combustion chamber 23 may, for a gas engine, for example, be approximately 1.0. The controller 76 may regulate pre-combustion chamber air valve 74 and pre-combustion chamber fuel valve 70 such that in the main combustion chamber 20 a leaner mixture may be obtained than in the pre-combustion chamber 23. The leaner mixture may, for a gas engine, for example, have an air/fuel ratio in the range of between approximately 1.5-1.7.

Although in the embodiments shown in Figs. 1 and 2, the supply of air to the pre-combustion chamber 23 is depicted, the disclosure also includes an embodiment in which no separately controllable supply of air to the pre-combustion chamber 23 may be provided. Such an embodiment may, for example, include a control routine, wherein, when the engine 10 is stopped, but before the rotation of the engine 10 is actually ended, fuel supply to the pre-combustion chamber 23 and the combustion chamber 20 is terminated. Consequently, the pre-combustion chamber 23 and the main chamber 20 will be filled with air during the last strokes of the piston assembly 22 and may contain only air after the rotation of the engine 10 has actually stopped. When the engine 10 is started again, the supply of fuel to only the pre-combustion chamber 23 may be needed to achieve a desired air/fuel mixture in the pre-combustion chamber 23 and/or the main combustion chamber 20 of the selected combustion chambers 20.

When the pre-combustion chamber 23 and, optionally also the corresponding main chamber 20, contain an appropriate air/fuel mixture, the ignition arrangement 54 may be activated. This is represented by block 104 of Fig. 3. Activation of the ignition arrangement 54 may be effected via a signal provided by the controller 76 through ignition signal line 55. The ignition arrangement 29 may form a spark in the pre-combustion chamber 23 that may lead to combustion of the air/fuel mixture in the pre-combustion chamber 23. Subsequently, flames may project out of the pre-combustion chamber 23 into the main combustion chamber 20 via the orifices 53 in the pre-combustion chamber 23. The flames may effect combustion of the air/fuel mixture in the main combustion chamber 20.

The combustion in the main combustion chamber 20 may effect the associated piston assembly 22 to move away from the pre-combustion chamber 23 resulting in cranking of the crankshaft 52 of the engine 10. Cranking is the rotation of the crankshaft 2 effected by the downward movement of the piston assembly 22. Through this cranking, the other piston assemblies 22 are put into motion, as well as the opening and closing of the intake port valves 56 and the exhaust port valves 58 are effected.

Subsequently, the supply of fuel to the pre-combustion chambers 23 and the main chambers 20 may be regulated by controller 76 such that the speed of the engine gradually increases as desired. To that end, during a start up phase which is represented by block 106 in combination with blocks 102-104 of Fig. 3, both the moment of opening as well as the duration of the opening time of pre-combustion chamber fuel valves 70, main chamber fuel valves 44 and/or pre-combustion chamber air valves 74 may be varied by the controller 74. Also the control of the ignition arrangements 54 may be varied during the start up phase of the engine 10. To that end, the controller 76 may obtain sensor information dynamically for obtaining information which is indicative of the dynamic piston assembly positions. Based on this dynamically changing information, the timing of fuel and/or air supply as well as the timing of the ignition may be varied.

When a rotational speed of the engine 10 has reached a certain minimum value, the normal or conventional operation of the engine 10 may commence and the conventional control of fuel supply and ignition may take over the start up control. This phase of conventional control is represented in block 105 of Fig. 3.

It is clear from the above that in a multi-combustion chamber engine more than one piston assemblies may be in a desired position range before start. Consequently, instead of only one pre-combustion chamber, the pre-combustion chambers of more than one combustion chamber of the engine may be filled with fuel and, optionally, air in order to start the engine. The controlled filling of pre-combustion chambers may be continued for some time before switching over to conventional combustion control of the engine.

The present disclosure may provide a pre-combustion chamber engine starting arrangement without a separate start motor arrangement, which is conventionally necessary to start pre-combustion chamber engines. However, the present disclosure also includes an embodiment having a start motor arrangement to assist during start up. In another embodiment the controlled supply of fuel to selected pre-combustion chambers during startup as described may assist a start motor during start up. Consequently, the start motor may be smaller. Due to the possibility to regulate the operation of each of the pre-combustion chamber fuel valves 70 so that a selected one of the pre-combustion chambers 23 may be filled with fuel when the engine 10 is still stationary and due to the possibility to activate the ignition arrangement 54 associated with the selected pre-combustion chamber 23 when the engine 10 is still stationary, cranking of the pre-combustion chamber engine 10 may be feasible even without the use of a separate start motor arrangement or with a smaller start motor arrangement.

It will be apparent to those having ordinary skill in the art that various modifications and variations can be made to the disclosed start up arrangement. Other embodiments will be apparent to those having ordinary skill in the art from consideration of the specification. It is intended that the specification and examples be considered as exemplary only. Other aspects, features and advantages will be apparent upon an examination of the attached drawings and appended claims.

## Claims

1. An engine comprising:
a plurality of combustion chambers, each having a pre-combustion chamber and a main chamber;
a plurality of piston assemblies, each of the plurality of piston assemblies being movable in the main chamber of an associated one of the plurality of combustion chambers;
at least one pre-combustion chamber fuel valve associated with each pre-combustion chamber controllable to introduce an amount of fuel into the associated pre-combustion chamber,
an ignition arrangement associated with each pre-combustion chamber; and
a controller configured to:
determine a position of at least one of the piston assemblies;
select at least one piston assembly that is in a desired range of piston positions;
regulate operation of the at least one pre-combustion chamber fuel valve to introduce fuel into the pre-combustion chamber associated with the selected at least one piston assembly; and
activate the ignition arrangement associated with the selected at least one piston assembly to initiate cranking of the engine.

2. The engine according to claim 1, wherein the desired range of piston positions is a range within the power stroke angles of a piston assembly.

3. The engine according to claim 1, further including an air inlet provided for each of the plurality of combustion chambers, wherein the controller is configured to regulate the air inlet to obtain a desired air/fuel mixture in the pre-combustion chamber of the at least one of the plurality of combustion chambers.

4. The engine according to claim 3, wherein the air inlet of each of the plurality of combustion chambers is a pre-combustion chamber air inlet connected to the associated pre-combustion chamber.

5. The engine according to claim 3, wherein the air inlet of each of the plurality of combustion chamber is a pre-combustion chamber air inlet connected to a pre-combustion chamber fuel line leading to the associated pre-combustion chamber.

6. The engine according to any one of claims 1-5, wherein the controller is configured to regulate the selected at least one pre-combustion chamber fuel valve so as to provide an air/fuel ratio in the associated pre-combustion chamber of substantially 1.0.

7. The engine according to any one of claims 1-6, wherein the controller is configured to regulate the selected at least one pre-combustion chamber fuel valve so as to provide an air/fuel ratio in the associated main chamber of substantially 1.5 to 1.7.

8. The engine according to claim 4 or 5, the controller being configured to regulate both the selected at least one pre-combustion chamber fuel valve and the associated pre-combustion chamber air inlet to obtain an air/fuel ratio in the pre-combustion chamber of substantially 1.0.

9. The engine according to claim 4 or 5, the controller being configured to regulate both the selected at least one pre-combustion chamber fuel valve and the associated pre-combustion chamber air inlet to obtain an air/fuel ration in the associated main chamber of substantially 1.5 to 1.7.

10. The engine according to any one of claims 1-9, wherein the controller is configured to regulate supply of fuel to the pre-combustion chambers during a start up phase such that the speed of the engine gradually increases during start up as desired.

11. The engine according to claim 10, wherein the control is configured to control at least during the start up phase of the engine at least one of the following parameters: the moment of opening of pre-combustion chamber fuel valves, the duration of the opening time of pre-combustion chamber fuel valves, the moment of opening of main chamber fuel valves, the duration of opening of main chamber fuel valves, the moment of opening of pre-combustion chamber air valves, the duration of opening of pre-combustion chamber air valves, the moment of activation of ignition arrangements, and the duration of activation of ignition arrangements.

12. The engine according to claim 11, wherein the controller is configured to dynamically obtain sensor information that is indicative of the dynamic piston assembly positions and, based on this dynamically changing information, to vary at least one of following parameters: the timing of pre-combustion chamber fuel supply valve and the timing of the ignition arrangements.

13. The engine according to any one of the claims 1-12, wherein the controller is configured to commence a conventional control of fuel supply and ignition when a rotational speed of the engine has reached a certain minimum value.

14. A method for starting an engine having a plurality of combustion chambers and a plurality of piston assemblies, each of the plurality of combustion chambers having a pre-combustion chamber and a main chamber, and each of the plurality of piston assemblies being movable in the main chamber of an associated one of the plurality of combustion chambers, the method comprising:
determining a position of at least one of the piston assemblies;
select at least one piston assembly that is in a desired range of piston positions;
introducing a controllable amount of fuel into the pre-combustion chamber associated with the selected at least one piston assembly; and
igniting the fuel in the pre-combustion chamber associated with the selected at least one piston assembly to initiate cranking of the engine.

15. The method according to claim 14, further including introducing air into in the pre-combustion chamber associated with the selected at least one piston assembly so as to form an air/fuel mixture with a desired air/fuel ratio.

16. The method according to any one of claim 14-15, wherein before igniting, a desired air/fuel ratio in the pre-combustion chamber associated with the selected at least one piston assembly is substantially 1.0.

17. The method according to any one of claims 14-16, wherein before igniting, a desired air/fuel ratio in the main chamber associated with the selected at least one piston assembly is in the range between about 1.5 and 1.7.

18. The method according to any one of claims 14-17, including regulating supply of fuel to the pre-combustion chambers during a start up phase such that the speed of the engine gradually increases during start up as desired.

19. The method according to claim 18, including controlling, at least during the start up phase of the engine, at least one of the following parameters: the moment of opening of pre-combustion chamber fuel valves, the duration of the opening time of pre-combustion chamber fuel valves, the moment of opening of main chamber fuel valves, the duration of opening of main chamber fuel valves, the moment of opening of pre-combustion chamber air valves, the duration of opening of pre-combustion chamber air valves, the moment of activation of ignition arrangements, and the duration of activation of ignition arrangements.

20. The method according to claim 19, including dynamically obtaining sensor information that is indicative of the dynamic piston assembly positions and, based on this dynamically changing information, varying at least one of following parameters: the timing of pre-combustion chamber fuel supply and the timing of the ignition.

21. The method according to any one of the claims 14-20, including commencing conventional combustion control when the engine has reached a certain minimum value of rotational speed.
